# EUROPEAN PATENT APPLICATION

(11) **EP 4 570 712 A2**
(43) Date of publication of application: **18.06.2025**
(21) Application number: 24218228.5
(22) Date of filing: 09.12.2024
(51) Int. Cl.: B65G 15/58, B65G 17/32, B65G 17/46, B65G 35/06, B65G 54/02, H02K 41/03

(54) **GRIPPER FOR PICKING UP PACKAGES, CONVEYING APPARATUS FOR PACKAGES COMPRISING A GRIPPER AND PACKAGING LINE HAVING A CONVEYING APPARATUS**

(30) Priority: 11.12.2023 IT 202300026358
(71) Applicant: Tetra Laval Holdings & Finance S.A., 1009 Pully (CH)
(72) Inventor: ROSSI, Stefano, 41123 Modena (IT); CANALINI, Pierluigi, 41123 Modena (IT); VIOLA, Massimo, 41123 Modena (IT); PICCININI, Giorgio, 41123 Modena (IT); CARULLI, Paola, 41123 Modena (IT); PROJETTO, Marco, 41123 Modena (IT)
(74) Representative: Tetra Pak - Patent Attorneys SE

(57) **Abstract**

It is disclosed a gripper for handling packages (2), comprising:
- a support platform (3) to carry at least a package (2);
- a retaining device (4), carried by the support platform (3), movable between an open configuration (C1), at which it allows for receiving o releasing the package (2), and a retaining configuration (C2), at which it retains the package (2),

the retaining device (4) comprising a first wall (5) and a second wall (6) presenting each one a respective surface (51, 61), facing each other,
the retaining device (4) defining a receiving space (8) between the first and the second wall (5, 6) to accommodate said package (2) on the support platform (3), the second wall (6) being linearly movable along a direction of advancement (D) between a first position (P1) defining said open configuration (C1) of the retaining device (4), at which the second wall (6) is moved away from the first wall (5), and a second position (P2) defining the retaining configuration (C2) of the retaining device (4), at which the second wall (6) is moved towards to the first wall (5).

## Description

### TECHNICAL FIELD

The present invention relates to a gripper for picking up packages, in particular to a gripper for picking up packages filled with a pourable product, in particular a pourable food product.

Moreover, the present invention also relates to a conveying apparatus for packages filled with a pourable product, comprising a gripper.

Moreover, the present invention also relates to a packaging line for producing packages filled with a pourable product having at least a conveying apparatus.

### BACKGROUND ART

As is known, many liquid or pourable food products, such as fruit juice, UHT (ultrahigh-temperature treated) milk, wine, tomato sauce, etc., are commonly sold in packages, in particular sealed packages, made of sterilized packaging material. A typical example is the parallelepiped-shaped package for pourable food products known as Tetra Brik Aseptic (registered trademark), which is made by sealing and folding a laminated strip packaging material.

The packaging material has a multilayer structure comprising a carton and/or paper base layer, covered on both sides with layers of heat-seal plastic material, such as polyethylene.

Such packages are typically produced on fully automatic packaging machines forming and filling the packages starting from a multilayer packaging material. The formed packages are conventionally transported to operational station for additional procedures.

For the transportation of packages, grippers that hold the package are typically employed.

Said grippers present a platform, upon which the packages can be positioned, and a retaining mechanism to secure the package during transportation.

There are known solutions that employ grippers consisting of a clamp which secures the package by gripping it through the rotational motion of the clamp's jaws.

This rotational movement of the clamp's jaws may result in a highly restricted contact area, essentially a line, between the jaws ends and the external surfaces of the packages where the force is applied. Consequently, the pressure exerted on the outer surface of the package can give rise to (esthetical) defects. Furthermore, it is important to preserve the package's integrity both in the gripping and in transportation.

Consequently, in the relevant sector, there is a substantial demand for grippers capable of ensuring the transportation of packages without the risk of packages dislodgment.

Furthermore, there is a strong need for grippers that can hold the packages without causing them any damage.

### DISCLOSURE OF INVENTION

The objective of the present invention is therefore to meet one or more of the aforementioned needs by providing a gripper for picking up packages, a conveying apparatus for packages comprising the gripper and a packaging line having the conveying apparatus, that can, advantageously, securely and stably retain packages safeguarding their integrity.

The technical features of the invention, in accordance with the stated objectives, are clearly discernible from the content of the appended claims.

### BRIEF DESCRIPTION OF THE DRAWINGS

The advantages of the invention will be more conspicuously evident in the ensuing detailed description, accompanied by reference to the appended drawings, which represent a purely exemplary and non-limiting embodiment, wherein:
- Figures 1A and 1B schematically depict perspective views of a gripper for picking up packages, in accordance with the description;
- Figures 2A and 2B schematically depict perspective views of the gripper in two different configurations, in accordance with the description;
- Figures 3A and 3B schematically depict an embodiment of the gripper, in accordance with the description, respectively in a side view and in a perspective view;
- Figure 4A schematically depicts a perspective view of another embodiment of the gripper, in accordance with the description;
- Figure 4B schematically depicts a perspective view of the gripper of figure 4A with some parts removed to better highlight others;

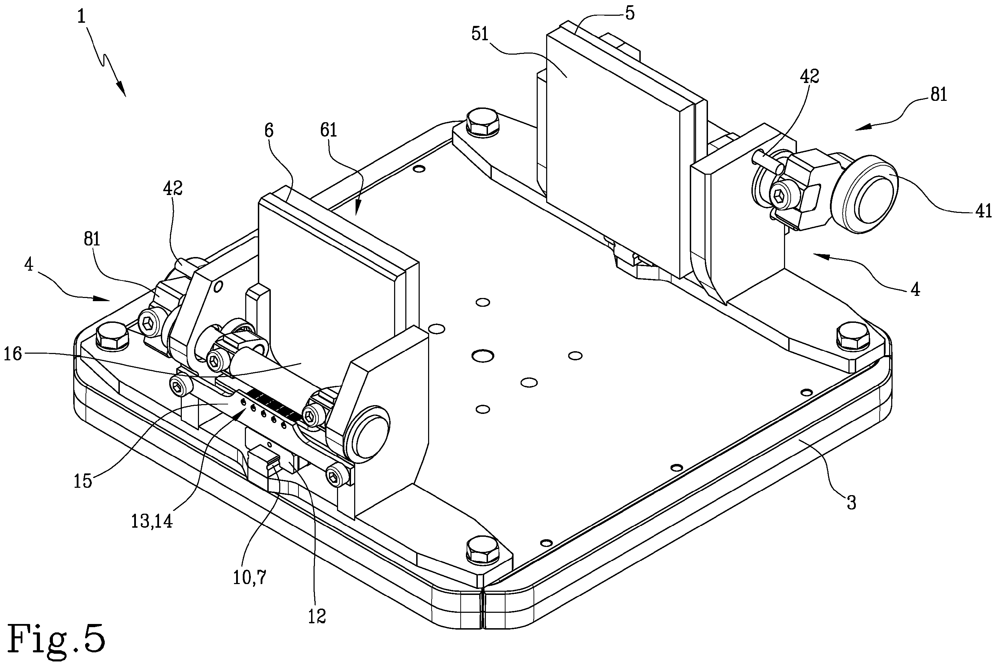

- Figure 5 schematically depicts a perspective view of another embodiment of the gripper, in accordance with the description;

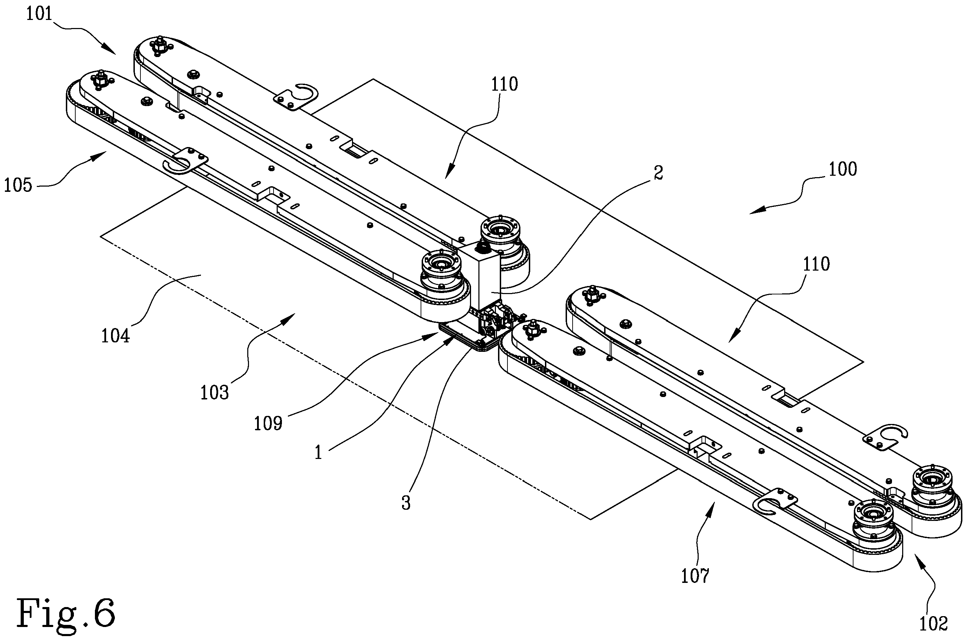

- Figure 6 schematically depicts a perspective view of a conveying apparatus for packages comprising a gripper, in accordance with the description;

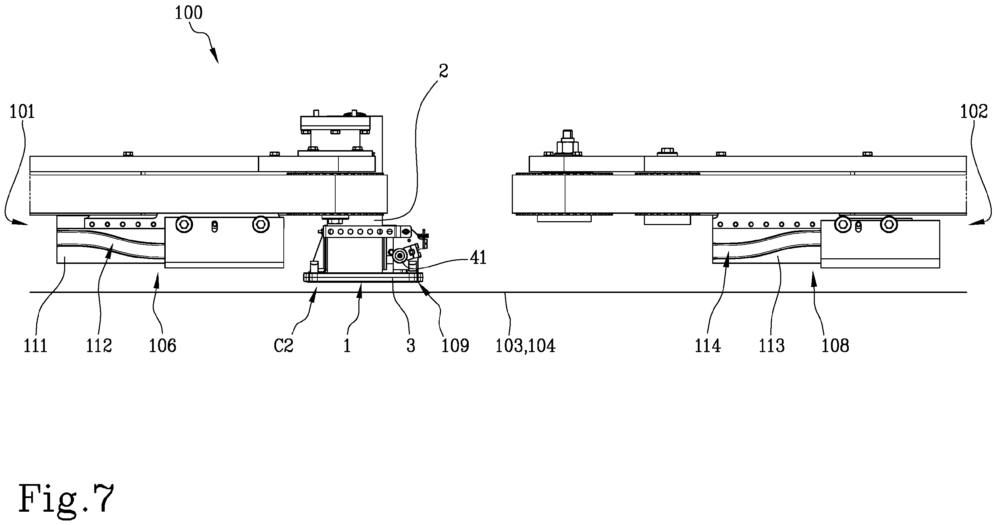

- Figure 7 schematically depicts a side view of a conveying apparatus, in accordance with the description;

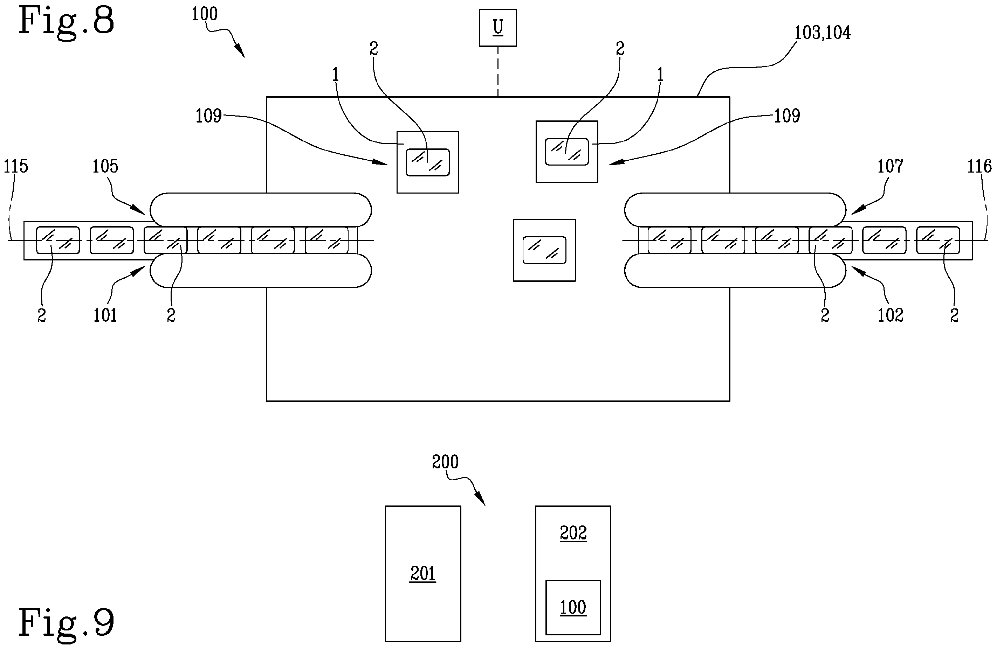

- Figure 8 schematically depicts a top view of a conveying apparatus, in accordance with the description;
- Figure 9 shows, a block diagram of a packaging line, in accordance with the description.

### BEST MODES FOR CARRYING OUT THE INVENTION

The invention concerns a gripper 1 for handling packages 2, in particular packages filled with a pourable product, in particular a pourable food product. The gripped is suitable for coupling with a carrier of a planar motor system.

The gripper 1 comprises a support platform 3 to carry at least a package 2. Preferably, the support platform 3 defines a supporting plane A.

In other words, the package 2 can be arranged on the supporting plane A defined by the support platform 3 of the gripper 1.

The gripper 1 comprises a retaining device 4, carried by the support platform 3. The retaining device 4 is movable between an open configuration C1, at which it allows for receiving or releasing the package 2, and a retaining configuration C2, at which it retains the package 2.

The retaining device 4 comprises a first wall 5 and a second wall 6 presenting each one a respective surface 51, 61, the surfaces 51, 61 facing each other.

The retaining device 4 defines a receiving space 8 between the first and the second wall 5, 6 to accommodate said package 2 on the support platform 3. Advantageously, the receiving space 8 allows the package 2 to be positioned on the support platform 3 between the first and second walls 5, 6.

The second wall 6 is linearly movable along a direction of advancement D, e.g. parallel to the supporting plane A, between a first position P1 and a second position P2.

The first position P1 of the second wall 6 defines the open configuration C1 of the retaining device 4, at which the second wall 6 is moved away from the first wall 5.

The second position P2 of the second wall 6 defines the retaining configuration C2 of the retaining device 4, at which the second wall 6 is moved towards to the first wall 5.

In the second position P2 of the second wall 6, considering a package accommodated upon the support platform 3 of the gripper 1, the surfaces 51, 61 of the first and the second wall 5, 6 are in contact with a respective first and second surface 21, 22 of the package 2. In particular, the first surface 21 is opposite to the second surface 22.

The linear movement of the second wall 6 along the direction of advancement D from the first position P1 towards the second position P2 comprises approaching the first wall 5.

The entire surface 61 of the second wall 6 may come into contact with the second surface 22 of the package 2, in particular the entire surface 61 may contact the second surface 22 at the same time.

Advantageously, the linear motion of the second wall 6 allows for approaching the package 2 across its entire surface 61.

Advantageously, the linear motion of the second wall 6 from the first position P1 to the second position P2 allows for accommodating the package 2 by pushing it towards the first wall 5.

In the second position P2, the first wall 5 and the second wall 6 are configured to be placed in contact to the respective first and second surface 21, 22 of the package 2, in particular by means of the respective surfaces 51, 61. Advantageously, the first and second walls 5, 6, which face each other, provide a secure and stable grip on the package 2 itself held between the surfaces 51, 61. Additionally, securely holding the package 2 between two walls 5, 6, one of which is fixed, enhances the accuracy of the positioning of the package 2 on the gripper 1.

Advantageously, the contact between the walls 5, 6 and the outer first and second surfaces 21, 22 of the package 2 through the entire surfaces 51, 61 of the walls 5, 6, coupled with the linear movement of the second wall 6, helps preserve the integrity of the package 2 and prevents damages. In fact, the retaining force is distributed across the entire surface 51, 61, avoiding excessive pressure that could harm the package 2.

Preferably, the surface 51 of the first wall 5 is planar.

Preferably, the surface 61 of the second wall 6 is planar.

According to an embodiment, the surface 61 of the second wall 6 is square shaped. Advantageously, a surface square shaped in contact with the external surface of the package 2 ensures, in the retaining configuration C2, the distribution of the retaining force, preventing damages to the package 2 during retention.

Preferably, the surface 51 of the first wall 5 is square shaped.

According to an aspect of the description, the surface 61 of the second wall 6 and/or the surface 51 of the first wall 5 defines an area between 20 and 50 cm², preferably between 25 and 39 cm².

According to a preferred embodiment, the surface 51, 61 of the first and/or of the second wall 5, 6 an anti-slip material, configured to prevent a movement of the package 2. For example, the surface 51, 61 may comprise a (synthetic or natural) rubber material.

The surface 51, 61 of the first and/or second wall 5, 6 may comprise a deformable material, configured to adapt the shape thereof when in contact with the package 2. In particular, the surfaces 51, 61 of the first and/or of the second wall 5, 6 comprise a deformable (natural or synthetic) rubber material.

Preferably, each of the first wall 5 and the second wall 6 comprises a layer or coating made of rubber material, defining its respective surface 51, 61.

Advantageously, a surface 51, 61 made of deformable or anti-slip material that contact the external surfaces 21, 22 of the package 2 in the retaining configuration C2 ensures an improved level of friction between the package 2 and the surface 51, 61 of the wall 5, 6.

The greater the friction between the surface 51, 61 and the package 2, the more secure the retainment of the package 2 becomes.

In particular a high level of friction ensures the transportation of package 2 by the gripper 1 without the risk of packages 2 dislodgment.

Advantageously, rubber material adapt itself upon contact with package 2, thereby preventing damages to the package 2.

In a preferred embodiment, the gripper 1 comprises a connecting element 9 between the first and the second wall 5, 6. The first wall 5, the second wall 6 and the connecting element 9 partially surround said receiving space 8.

The connecting element 9 is configured to contact the package 2 at a third surface 23 thereof. The third surface 23 may be different from the first and second surface 21, 22.

In other words, when the package 2 is positioned on the support platform 3, through the receiving space 8, it is in contact with the connecting element 9.

The connecting element 9 is, for example, a bar, a rod, or a wall.

Preferably, the connecting element 9 is coupled with a stationary portion 17 of the retaining devices 4 connected to the first wall 5 and optionally with a stationary portion 15 of the retaining devices 4 connected to the second wall 6. Advantageously, the connecting element 9 defines a stop position for the package 2 when it is positioned on the support platform 3 through the receiving space 8. Advantageously, the connecting element 9 improves security and stability of the retainment in the transportation of the package 2.

Advantageously, the connecting element 9 enhances the accuracy of the positioning of the package 2 upon the support platform 3 of the gripper 1. Preferably, the connecting element 9 comprises a layer made of deformable and/or anti-slip material, such as described previously, covering at least a portion of a surface of the connecting element 9 oriented towards the package 2.

The accuracy of the package 2 positioning on the gripper 1 is crucial within operational station for the execution of additional procedures, such as the capping, towards which the gripper can transport the package 2.

Preferably, considering the first wall 5 stationary, the connecting element 9 is coupled with the first wall 5 and with a stationary portion of the gripper 1 of the second wall 6.

To clarify, a stationary portion of the gripper 1, is an element of the gripper 1 that does not change its position with respect to the support platform 3 considering a movement of the second wall 6 between the first position P1 and the second position P2.

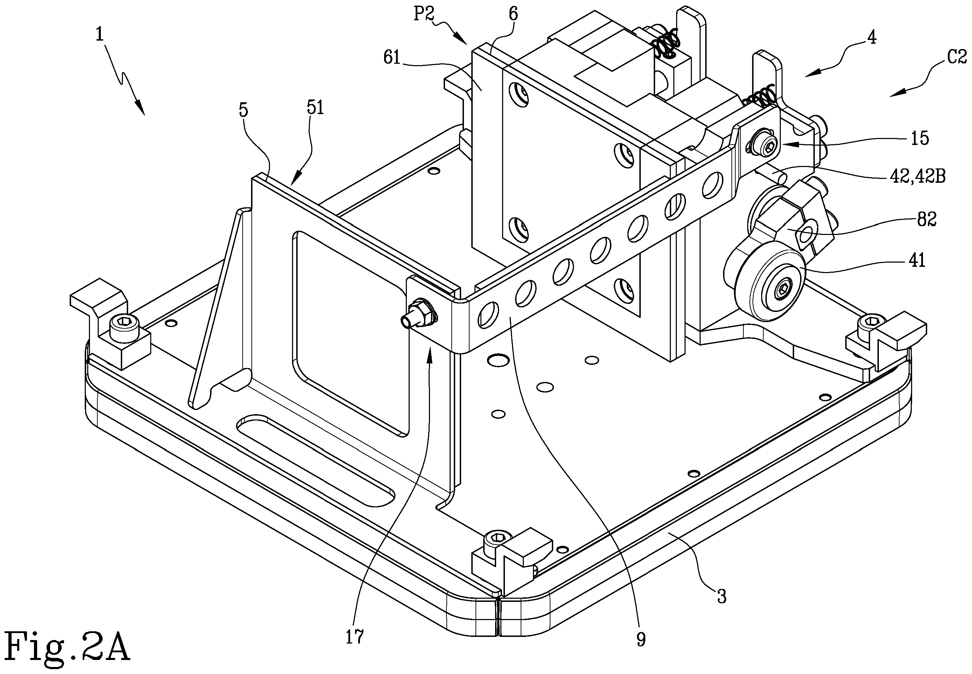

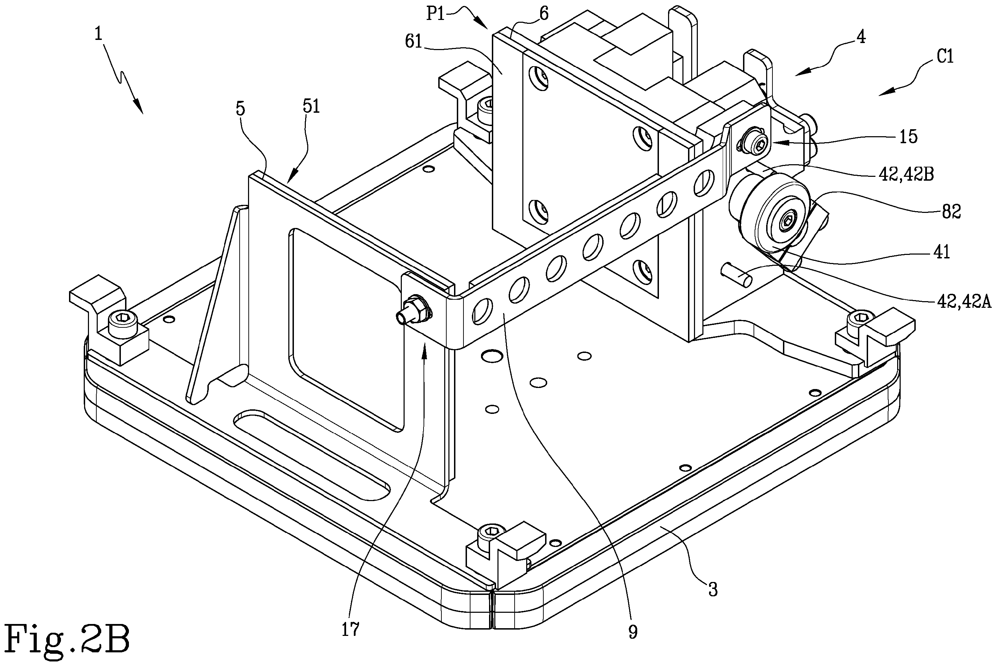

Preferably, the retaining device 4 comprises a stop element 42 for stopping the movement of the second wall 6 in the first position P1 or in the second position P2. In particular, as illustrated in figure 2B, the retaining device 4 can comprise a first stop element 42A, for stopping the movement of the second wall 6 in the second position P2 and a second stop element 42B for stopping the movement of the second wall 6 in the first position P1.

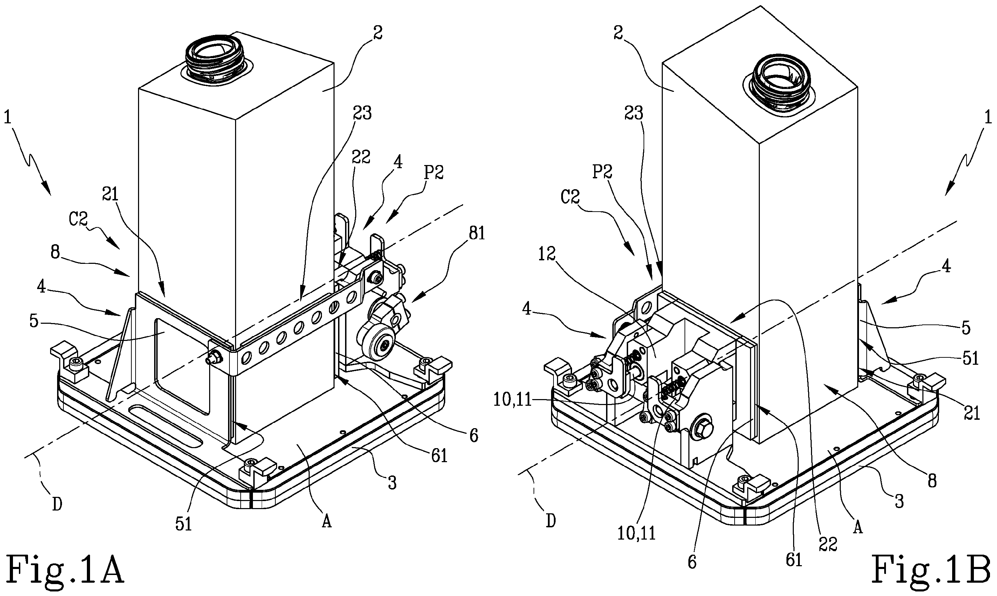

In an embodiment, as shown in figure 1A, the retaining device 4 comprises a slider-crank mechanism 81 configured to move the second wall 6 between the first position P1 and the second position P2.

Stated differently, the slider-crank mechanism 81 causes the movement of the second wall 6 between the first position P1 and the second position P2 along the direction of advancement D.

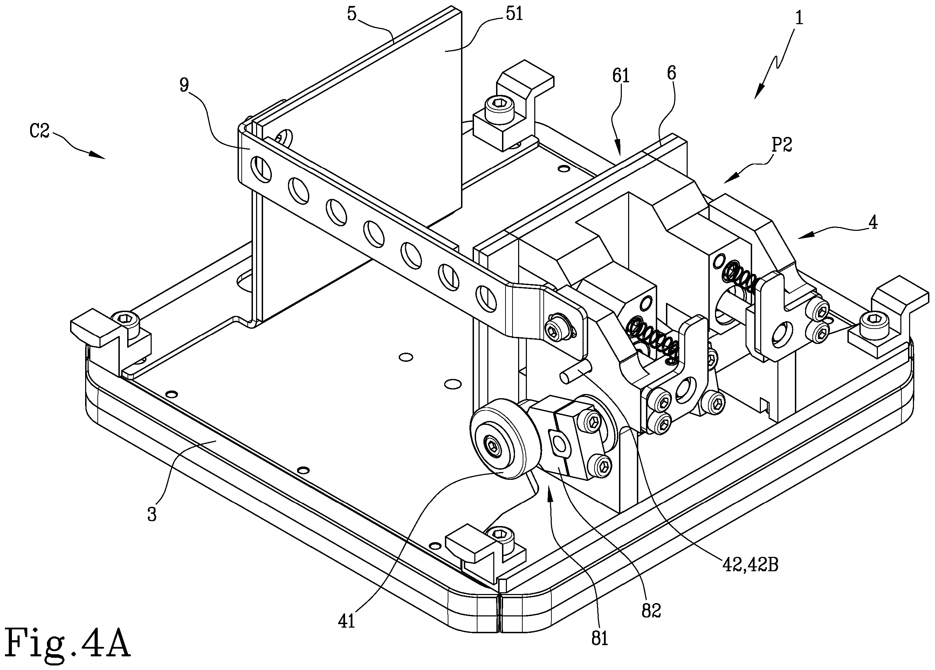

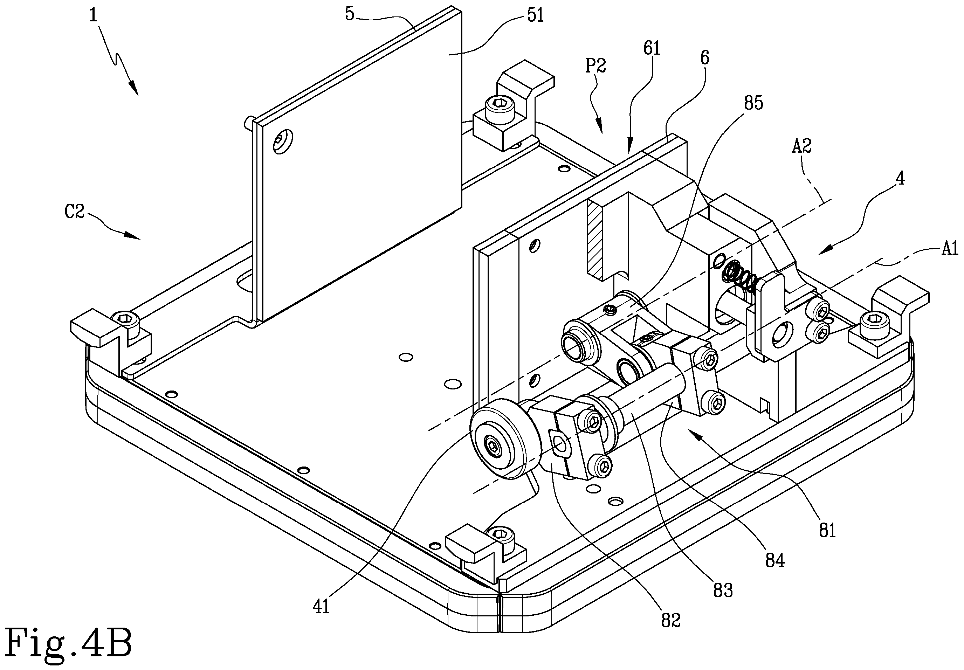

Preferably, as shown in figure 4B the slider-crank mechanism 81 comprises a crank 82 and a shaft 83 rotatable around its own axis A1.

The crank 82 is connected to the shaft 83 to rotate around the axis A1 of the shaft 83 and to transmit rotational motion to it.

The slider-crank mechanism 81 comprises a first arm 84, connected to the shaft 83 to rotate together with the shaft 83 around its axis A1, and a second arm 85, hinged to the second wall 6.

The first arm 84 and the second arm 85 are hinged together for allowing them to rotate relative to each other around an axis A2 parallel to the axis A1 of the shaft 83.

For enhanced clarity, when the crank 82 rotates around the axis A1 of the shaft 83, the shaft 83 itself rotates in unison around its own axis A1; this rotation of the shaft 83 leads to the first arm 84 rotating around the axis A1 of the shaft 83. The motion of the first arm 84 results in a reciprocal rotation of the first and second arms 84, 85 in opposite directions around the axis A2 parallel to the axis A1 of the shaft 83. This movement of the second arm 85 enables the transmission of linear motion to the second wall 6 between the first and second positions P1, P2.

The slider-crank mechanism 81 transforms the rotational motion of the crank 82 in the linear motion of the second wall 6.

In particular, a rotation of the crank 82 around an axis A1 perpendicular to the direction of advancement D (and, preferably parallel to the supporting plane A) transmits the linear translational motion along the direction of advancement D to the second wall 6.

Preferably, the second stop element 42B is configured to stop the rotation of the crank 82 in a position corresponding to the first position P1 of the second wall 6. Preferably, the first stop element 42A is configured to stop the rotation of the crank 82 in a position corresponding to the second position P2 of the second wall 6.

According to an aspect, the first stop element 42A and the second stop element 42B are fixed pins connected to a stationary portion of the gripper 1.

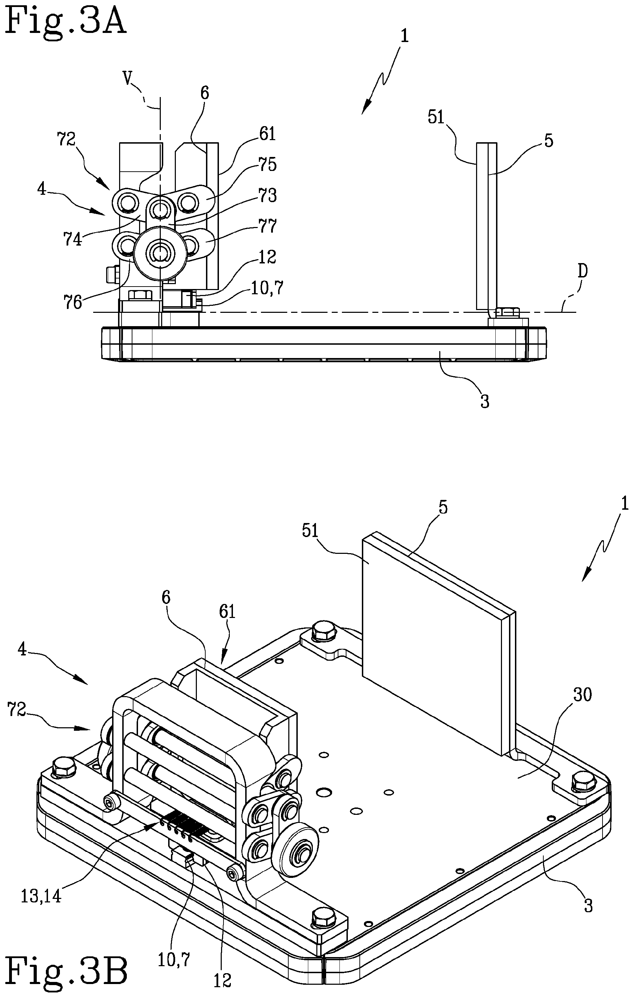

In an alternative embodiment, as shown in figure 3A, the retaining device 4 comprises a bar linkage mechanism 72 configured to move the second wall 6 between the first position P1 and the second position P2.

Preferably, the bar linkage mechanism 72 comprises a vertical bar 73 hinged to at least a first bar 74 and a second bar 75, the first bar 74 being hinged to a stationary portion of the retaining device 4, the second bar 75 being hinged to the second wall 6, the vertical bar being movable along a vertical direction V orthogonal to direction of advancement D.

The vertical direction V of movement of the vertical bar 73 is orthogonal to the direction of advancement D (and, preferably parallel to the supporting plane A).

In particular, a vertical translation of the vertical bar 73 results in the rotation of the first bar and second bars 74, 75 around the respective hinge at which they are hinged to the vertical bar 73; that rotation results in a rotation of the first bar 74 around the respective hinge at which it is hinged to a stationary portion of the retaining device 4 and in a rotation of the second bar 75 around the respective hinge at which it is hinged to the second wall 6; these movements results in the linear translational motion along the direction of advancement D of the second wall 6 between the first position P1 and the second position P2.

To clarify, the bar linkage mechanism 72 causes the movement of the second wall 6 between the first position P1 and the second position P2 along the direction of advancement D.

According to a preferred embodiment, the bar linkage mechanism 72 comprises a vertical bar 73 hinged to the first bar 74, the second bar 75, a third bar 76, a fourth bar 77.

The first bar 74 and the third bar 76 are hinged to a stationary portion of the retaining device 4.

The second bar 75 and the fourth bar 77 are hinged to the second wall 6.

The bar linkage mechanism 72 defines two parallelogram linkages: a first parallelogram linkage defined by the first bar 74, the vertical bar 73, the third bar 76 and the stationary portion of the retaining device 4; a second parallelogram linkage defined by the second bar 75, the vertical bar 73, the fourth bar 77 and the second wall 6.

The vertical bar 73 is in common to the two parallelogram linkages.

The first bar 74 and the third bar 76 are parallel to each other.

The second bar 75 and the fourth bar 77 are parallel to each other.

Preferably, the first bar 74, the second bar 75 are all of the same length. Preferably, the third bar 76 and the fourth bar 77 are all of the same length. Advantageously, the two described parallelogram linkages ensure that the vertical bar 73 moves exclusively in the vertical direction V.

In particular, a vertical translation of the vertical bar 73 results in the rotation of the first bar 74, the second bar 75, the third bar 76 and the fourth bar 77 around the respective hinge at which they are hinged to the vertical bar 73; that rotation results in a rotation of the first and third bars 74, 76 around the respective hinges at which they are hinged to the stationary portion of the retaining device 4 and in a rotation of the second and fourth bars 75, 77 around the respective hinges at which they are hinged to the second wall 6; these movements results in the linear translational motion along the direction of advancement D of the second wall 6 between the first position P1 and the second position P2.

Preferably, the second stop element 42B is configured to stop the movement of the vertical bar 73 along the vertical direction V at a higher level corresponding to the first position P1 of the second wall 6.

Preferably, the first stop element 42A is configured to stop the movement of the vertical bar 73 along the vertical direction V at a lower level corresponding to the second position P2 of the second wall 6.

Specifically, the higher and the lower levels of the vertical bar 73, determined by the first and the second stop element 42A, 42B respectively, are designed such that: moving the vertical bar 73 from the higher level to the lower level results in a linear motion of the second wall 6 from the first position P1 to the second position P2, while moving the vertical bar 73 from the lower level to the higher level results in a linear motion of the second wall 6 from the second position P2 to the first position P1.

In another alternative embodiment, not shown in the appended figures, the retaining device 4 comprises a wheel, movable along a vertical direction, in contact with a flat element inclined with respect to the plane A defined by the support platform 3.

The movement of the wheel along the vertical direction results in a displacement of the inclined flat element along the direction of advancement D causing the movement of the second wall 6 between the first and second positions P1, P2.

In an embodiment, the gripper 1 comprises a linear guide 10, running along said direction of advancement D, for moving the second wall 6 along the direction of advancement D.

Advantageously, the linear guide 10 guides the movement of the second wall 6 along the direction of advancement D.

Guiding the movement of the second wall 6 through the linear guide 10 ensures that the movement is along said direction D.

Preferably, the gripper 1 comprises at least a sliding element 12 for sliding along said linear guide 10.

The sliding element 12 is connected to the second wall 6 for moving the second wall 6 along said direction of advancement D.

According to an aspect of the description, the gripper 1 comprises at least two linear guides 10, running along said direction of advancement D, and respective sliding element 12 for sliding along said linear guides 10.

In an embodiment, the linear guide 10 is a prismatic guide 7.

In another embodiment, the linear guide 10 is a circular section guide 11. Advantageously, comprising two linear circular section guides 11 ensures that the sliding element 12 does not rotate around a linear circular section guide 11 axis. According to an aspect of the present description, the second wall 6 is bistable in the first and in the second position P1, P2.

The term bistable refers to the mechanical condition of bistability of a mechanical system. In particular, the retaining device 4 (in every embodiment aforementioned) exists in two distinct stable equilibrium states corresponding to the first position P1 and the second position P2 of the second wall 6.

In other words, the second wall 6 can be stable both in the first position P1 and the second position P2 and is capable of transitioning from one position to the other only in response to specific conditions or inputs by the retaining device 4. An example of a specific condition or input, considering the bars linkage mechanism 72 embodiment of the retaining device 4, is the vertical movement of the vertical bar 73 that results in the linear movement of the second wall 6 from the first position P1 to the second position P2, and vice versa.

In fact, considering that embodiment, the first stop element 42A effectively ensures the stability of the second wall 6 in its second position P2, preventing the vertical bar 73 moving below the lower level.

Moving the vertical bar 73 below said threshold lower level, the bars linkage mechanism 72 would consequently move resulting in a return of the second wall 6 from the second position P2 to the first position P1.

Therefore, the first stop element 42, 42A is configured to define a condition of stability of the second wall 6 in said second position P2.

Advantageously, bistability ensures a reliable switching mechanism from the first and the second position P1, P2 of the second wall 6. Advantageously, thanks to bistability, the second wall 6 can be maintained in the first or second position P1, P2 and any involuntary movement of the second wall 6 is minimized.

Preferably, the retaining device 4 comprises a holding element 13 configured to hold the second wall 6 in the first position P1 or in the second position P2. Please note that in the appended drawings, the holding element 13 is configured to hold the second wall 6 in the first position P1.

According to an embodiment, the holding element 13 is a magnetic element.

In particular, the magnetic holding element 13 is configured to maintain the second wall 6 back into the first position P1, corresponding to the open configuration C1, making the second wall 6 stable in that position, in particular by means magnetic attraction. For example, the second wall 6 may comprise a ferromagnetic element or the surface 61 of the second wall 6 may comprise a magnetic element. In the latter case, the magnetic element of the surface 61 and the holding element 13 may have opposite magnetic polarities and the magnetic element of the surface 61 may be configured to be attracted to the holding element 13.

Advantageously, the holding element 13 allows for minimizing clearance.

Advantageously, the magnetic holding element 13 allows for minimizing vibrations. In an alternative embodiment, the holding element 13 comprises at least a spring 14 connected to the second wall 6 and configured to retrieve the second wall 6 in the first position P1 (according to the appended drawings) or in the second position P2.

In particular, the spring 14 draws the second wall 6 back into the first position P1, corresponding to the open configuration C1, making the second wall 6 stable in that position.

The spring 14 is preferably anchored at a first end to a stationary portion 15 of the gripper 1 and at a second end to a portion 16 of the retaining device 4 that moves solidly with respect to the second wall 6 along the direction of advancement D. To clarify, the stationary portion 15 of the gripper 1, is an element of the gripper that does not change its position with respect to the support platform 3 considering a movement of the second wall 6 between the first position P1 and the second position P2.

In particular, the spring 14 has its equilibrium position when the second wall 6 is in the first position P1 which corresponds to the open configuration C1 of the retaining device 4.

According to an aspect of the present description, the projection of the retaining device 4 falls within an area 30 defined by the support platform 3.

To clarify, considering each component of the retaining device 4, its projection falls within the area 30 defined by the support platform 3.

In other words, the spatial footprint of the retaining device 4 does not exceed the volume of a solid with the support platform 3 as its base and lateral surfaces perpendicular to the supporting plane A established by the support platform 3. Advantageously, these features allow two or more grippers 1 to work closer without impeding each other.

Preferably, the gripper 1 extends more in height than in width.

In an embodiment, the first wall 5 is linearly movable along the direction of advancement D between a first position P1 defining said open configuration C1 of the retaining device 4, at which the first wall 5 is moved away from the second wall 6, and a second position P2 defining the retaining configuration C2 of the retaining device 4, at which the first wall 5 is moved towards to the second wall 6.

In other words, also the first wall 5 is linearly movable to retain and release the package 2.

Any aforementioned features regarding the second wall 6, and the associated advantages, can also be applied to the first wall 5.

According to an alternative embodiment, the first wall 5 is fixed with respect to the support platform 3.

Advantageously, having the first wall 5 fixed with respect to the support platform 3 allows accurately determining the positioning of the package 2 on the gripper 1 when the package 2 is held, that is, when the retaining device 4 is in the retaining configuration C2.

According to the present description, it is further disclosed a conveying apparatus 100 for advancing packages 2, in particular packages 2 filled with a pourable product, in particular a pourable food product.

The conveying apparatus 100 comprises at least a gripper 1, comprising one or more of the aforementioned features and presenting the associated advantages.

The conveying apparatus 100 comprises a planar motor system 103, comprising a plurality of carriers 109, a base element 104 and a control unit U configured for selectively and independently moving the carriers 109 over the base element 104. The support platform 3 of the gripper 1 may be coupled to a first surface of the carrier 109. The first surface may face away from the base element 104.

The carriers 109 comprise a second surface, opposite to the first surface, comprising a plurality of magnets. The second surface may face towards the base element 104. Preferably, the base element 104 comprises a plurality of coils and the control unit U is configured to energize the coils to move each carrier 109 by means of magnetic interaction between the magnets of the carrier 109 and the magnetic field generated by the coils.

In other words, the planar motor system 103 moves the carriers 109, and in turn the grippers 1, to transport the respective packages 2 they retain over the base element 104.

The planar motor system 103 may comprise one or more operational stations for the execution of additional procedures. The carriers 109 may be configured to move over the base element 104 at one or more such operational stations.

The conveying apparatus 100 comprises a retaining system 110 for controlling each retaining device 4 from the respective open configuration C1 into the respective retaining configuration C2 and from the respective retaining configuration C2 into the respective open configuration C1.

Advantageously, the retaining system 110 of the conveying apparatus 100 controls the retention and the release of the package 2 from the gripper 1 through the control of the retaining device 4.

According to a preferred embodiment, the retaining system 110 comprises:
- at least an inlet cam mechanism 111 comprising at least an inlet cam profile 112, to control the retaining device 4 from the open configuration C1 to the retaining configuration C2, and
- at least an outlet cam mechanism 113 comprising at least an outlet cam profile 114, to control the retaining device 4 from the retaining configuration C2 to the open configuration C1.

According to said embodiment, the retaining device 4 comprises at least one cam follower 41, configured to interact with the at least one inlet cam profile 112 and with the at least one outlet cam profile 114 to define the linear movement of at least the second wall 6 between said first position P1 and said second position P2. Stated differently, the cam follower 41 follows the inlet cam profile 112 determining the switch of the retaining device 4 from the open configuration C1 to the retaining configuration C2.

Preferably, the cam follower 41, following the inlet cam profile 112 is moved from a higher level to a lower level switching from the open configuration C1 to the retaining configuration C2 of the retaining device 4.

In particular, considering, for example, the embodiment illustrated in figure 3A, in which the retaining device 4 comprises a bars linkage mechanism 72, the cam follower 41 is attached to the vertical bar 73; the cam follower 41, following the inlet cam profile 112, is moved from the higher level to a lower level and this movement of the cam follower 41 results in the motion of the vertical bar 73 from the higher level to the lower level.

Stated differently, the cam follower 41 follows the outlet cam profile 114 determining the switching of the retaining device 4 from the retaining configuration C2 to the open configuration C1.

Preferably, the cam follower 41, following the outlet cam profile 114 is moved from a lower level to a higher level switching from the retaining configuration C2 to the open configuration C1 of the retaining device 4.

In particular, considering the embodiment illustrated in figure 3A, in which the retaining device 4 comprises a bars linkage mechanism 72, the cam follower 41 is attached to the vertical bar 73; the cam follower 41, following the outlet cam profile 114, is moved from the lower level to the higher level and this movement of the cam follower 41 results in a motion of the vertical bar 73 from the lower level to the higher level.

Specifically, the higher and the lower levels of the cam follower 41, determined by the first and the second stop element 42A, 42B respectively, are designed such that: moving the cam follower 41 results in a vertical translation of the vertical bar 73; this, consequently, results in a linear motion of the second wall 6 from the first position P1 to the second position P2 when the cam follower 41 passes from the higher level to the lower level, while results in a linear motion of the second wall 6 from the second position P2 to the first position P1 when the cam follower 41 passes from the lower level to the higher level.

According to an aspect, the inlet cam profile 112 and the outlet cam profile 114 are mirror symmetric with regard to one another.

In particular, considering, for example, the embodiment illustrated in figure 4B, in which the retaining device 4 comprises a slider-crank mechanism 81, the cam follower 41 is attached to the crank 82; the cam follower 41, following the inlet cam profile 112, is moved from the higher level to a lower level and this movement of the cam follower 41 results in a rotation of the crank 82 around the axis A1 in a first direction.

In particular, considering the embodiment illustrated in figure 4B, in which the retaining device 4 comprises a slider-crank mechanism 81, the cam follower 41 is attached to the crank 82; the cam follower 41, following the outlet cam profile 114, is moved from the lower level to the higher level and this movement of the cam follower 41 results in a rotation of the crank 82 around the axis A1 in second direction opposite with respect to the first direction of rotation.

According to an aspect, the inlet cam profile 112 and the outlet cam profile 114 are mirror symmetric with regard to one another.

Preferably, the stop element 42 of the retaining device 4 is configured for stopping the movement of the cam follower 41 in a position corresponding to the first position P1 or the second position P2 of the second wall 6.

In particular, as illustrated in figure 2B, the retaining device 4 can comprise a first stop element 42A, for stopping the movement of the cam follower 41 in a position corresponding to the second position P2 of the second wall 6, and a second stop element 42B for stopping the movement of the cam follower 41 in a position corresponding to the first position P1 of the second wall 6.

According to an aspect of the description, the conveying apparatus 100 comprises an inlet station 101 and an outlet station 102 and it is, preferably configured for advancing packages 2 from the inlet station 101 to the outlet station 102.

In an embodiment, the conveying apparatus 100 comprises:
- an inlet conveyor 105 configured to advance the packages 2 from the inlet station 101 to a receiving station 106 at which each package 2 is transferred onto a respective gripper 1,
- an outlet conveyor 107 configured to advance the packages 2 at least from a release station 108, at which each package 2 is released from the respective gripper 1 to the outlet station 102.

The retaining system 110 are preferably configured for controlling each retaining device 4 from the respective open configuration C1 into the respective retaining configuration C2 during receiving a respective package 2 at the receiving station 106 and to control each retaining device 4 from the respective retaining configuration C2 into the respective open configuration C1 during releasing the respective package 2 at the release station 108.

Preferably, the cam follower 41 is configured to interact with the at least one inlet cam profile 112 at the inlet station 101 and with the at least one outlet cam profile 114 at the outlet station 102.

According to an aspect of the description, the planar motor system 103 is configured to control an advancement of each gripper 1 along a receiving path 115 at the inlet station 101.

The retaining system 110 is configured to control each retaining device 4 from the respective open configuration C1 to the respective retaining configuration C2 during said advancement of the respective gripper 1 along at least a portion of the receiving path 115.

According to an aspect of the description, the planar motor system 103 is configured to control an advancement of each carrier 109, and in turn gripper 1, along a release path 116 in the outlet station 102.

The retaining system 110 is configured to control each retaining device 4 from the respective retaining configuration C2 to the respective open configuration C1 during said advancement of the respective gripper 1 along at least a portion of the release path 116.

In other words, along the receiving path 115 in the inlet station 101 the gripper 1 retains the package 2 and along the release path 116 in the outlet station 102 the gripper 1 release the package 2.

The planar motor system 103 controls the movement of the grippers 1 along the receiving and the release path 115, 116 and between them.

According to the present description, it is further disclosed a packaging line 200 for producing packages 2 filled with a pourable product, in particular a pourable food product.

The packaging line 200 comprises a packaging machine 201 for forming the packages 2.

The packaging line 200 comprises a handling apparatus 202 for handling the packages 2 after being formed, e.g. a capping station.

The packaging line 200 comprises at least one conveying apparatus 100 comprising one or more of the aforementioned features and presenting the associated advantages. The conveying apparatus 100 may be positioned at the handling apparatus 202 (see the non-limiting example depicted in the figure) and/or at the packaging machine 201.One or more embodiments may thus relate to a carrier 109 for a conveying apparatus 100. The conveying apparatus 100 may comprise a planar motor system 103 comprising a plurality of carriers 109, a base element 104 and a control unit U configured for selectively and independently moving the carriers 109 over the base element 104.

The carrier 109 comprises a gripper 1 according to one or more embodiments, a first surface coupled to the support platform 3 of the gripper 1, and a second surface, opposite to the first surface, comprising a plurality of magnets. The carrier may be a planar carrier.

Accordingly, the conveying apparatus for advancing packages 2 may comprise:
- at least a carrier 109 as previously described,
- a planar motor system 103, comprising a base element 104 and a control unit U configured for controlling the magnetization of the base element 104 in order to move selectively and independently each one of said carriers 109 over the base element 104 by means of the plurality of magnets.

The conveying device may further comprise a retaining system 110 for controlling each retaining device 4 from the respective open configuration C1 into the respective retaining configuration C2 and from the respective retaining configuration C2 into the respective open configuration C1.

## Claims

1. Gripper for handling packages (2), comprising:
- a support platform (3) to carry at least a package (2);
- a retaining device (4), carried by the support platform (3), movable between an open configuration (C1), at which it allows for receiving or releasing the package (2), and a retaining configuration (C2), at which it retains the package (2),
the retaining device (4) comprising a first wall (5) and a second wall (6) presenting each one a respective surface (51, 61), facing each other,
the retaining device (4) defining a receiving space (8) between the first and the second wall (5, 6) to accommodate said package (2) on the support platform (3), the second wall (6) being linearly movable along a direction of advancement (D) between a first position (P1) defining said open configuration (C1) of the retaining device (4), at which the second wall (6) is moved away from the first wall (5), and a second position (P2) defining the retaining configuration (C2) of the retaining device (4), at which the second wall (6) is moved towards to the first wall (5).

2. Gripper according to claim 1, wherein the surface (51, 61) of the first and/or of the second wall (5, 6) comprises a deformable and/or an anti-slip material.

3. Gripper according to any one of the preceding claims, comprising a connecting element (9) between the first and the second wall (5, 6), the first wall (5), second wall (6) and connecting element (9) partially surrounding said receiving space (8).

4. Gripper according to any one of the preceding claims, comprising a linear guide (10), running along said direction of advancement (D), for moving the second wall (6) along said direction of advancement (D).

5. Gripper according to the preceding claim, comprising at least a sliding element (12) for sliding along said linear guide (10), the sliding element (12) being connected to the second wall (6) for moving the second wall (6) along said direction of advancement (D).

6. Gripper according to any one of claims 4 or 5, wherein the linear guide (10) is a prismatic or circular section guide (7).

7. Gripper according to any one of the preceding claims, wherein the second wall (6) is bistable in the first and in the second position (P1, P2).

8. Gripper according to any one of the preceding claims, wherein the retaining device (4) comprises a holding element (13) configured to hold the second wall (6) in the first position (P1) or in the second position (P2).

9. Gripper according to the preceding claim, wherein the holding element (13) is a magnetic element, preferably the second wall (6) comprises a magnetic element configured to attract the holding element (13).

10. Gripper according to claim 8, wherein the holding element (13) comprises at least a spring (14) connected to the second wall (6) and configured to retrieve the second wall (6) in the first position (P1) or in the second position (P2).

11. Gripper according to any one of the preceding claims, wherein the retaining device (4) comprises at least a stop element (42) configured to stop the linear movement of the second wall (6) in the second position (P2) or in the first position (P1).

12. Gripper according to any one of the preceding claims, wherein the projection of the retaining device (4) falls within an area (30) defined by the support platform (3).

13. Gripper according to any one of the preceding claims, wherein the first wall (5) is linearly movable along the direction of advancement (D) between a first position (P1) defining said open configuration (C1) of the retaining device (4), at which the first wall (5) is moved away from the second wall (6), and a second position (P2) defining the retaining configuration (C2) of the retaining device (4), at which the first wall (5) is moved towards to the second wall (6).

14. Gripper according to any one of claims 1 to 12, wherein the first wall (5) is fixed with respect to the support platform (3).

15. A carrier (109) for a conveying apparatus (100) comprising a planar motor system (103), the carrier (109) comprising:
- a gripper (1) according to any one of the preceding claims,
- a first surface coupled to the support platform (3),
- a second surface, opposite to the first surface, comprising a plurality of magnets.

16. Conveying apparatus for advancing packages (2) comprising:
- at least a carrier (109) according to the preceding claim,
- a planar motor system (103), comprising a magnetizable base element (104) and a control unit (U) configured for controlling the magnetization of the base element (104) in order to move selectively and independently each one of said carriers (109) over the base element (104) by means of the plurality of magnets;
- a retaining system (110) for controlling each retaining device (4) from the respective open configuration (C1) into the respective retaining configuration (C2) and from the respective retaining configuration (C2) into the respective open configuration (C1).

17. Conveying apparatus according to the preceding claim, wherein the retaining system (110) comprises:
- at least an inlet cam mechanism (111) comprising at least an inlet cam profile (112), to control the retaining device (4) from the open configuration (C1) to the retaining configuration (C2),
- at least an outlet cam mechanism (113) comprising at least an outlet cam profile (114), to control the retaining device (4) from the retaining configuration (C2) to the open configuration (C1),
the retaining device (4) comprising at least one cam follower (41) configured to interact with the at least one inlet cam profile (112) and with the at least one outlet cam profile (114) to define the linear movement of at least the second wall (6) between said first position (P1) and said second position (P2).

18. Packaging line for producing packages (2) filled with a pourable product comprising at least one conveying apparatus (100) according to any one of the claims 16 or 17.
